Europäisches Patentamt

European Patent Office

Office européen des brevets

(11) Publication number: **0 075 683**
**B1**

# EUROPEAN PATENT SPECIFICATION

(45) Date of publication of patent specification: **27.11.85**

(51) Int. Cl.⁴: **G 21 C 1/02, G 21 C 15/00**

(21) Application number: **82107135.4**

(22) Date of filing: **06.08.82**

(54) **Fast breeder nuclear reactor vessel.**

(30) Priority: **29.09.81 JP 154214/81**
**30.09.81 JP 155130/81**
**30.09.81 JP 155131/81**

(43) Date of publication of application:
**06.04.83 Bulletin 83/14**

(45) Publication of the grant of the patent:
**27.11.85 Bulletin 85/48**

(84) Designated Contracting States:
**DE FR GB**

(56) References cited:
**EP-A-0 047 698**
**DE-A-2 730 124**
**DE-A-2 917 215**
**DE-A-3 132 514**

(73) Proprietor: **Kabushiki Kaisha Toshiba**
**72, Horikawa-cho Saiwai-ku**
**Kawasaki-shi Kanagawa-ken 210 (JP)**

(72) Inventor: **Yamamoto, Setsuo**
**2507-733 2-5-1, Shiomidai**
**Isogo-ku Yokohama-shi (JP)**
Inventor: **Miyazaki, Yoshiro**
**17-403, Nikko-danchi 1-3, Nikko-cho**
**Fuchu-shi Tokyo (JP)**
Inventor: **Yasunaga, Toshio**
**C-412, Toshiba-Kikuna-ryo 217 Mamedo-cho**
**Kohoku-ku Yokohama-shi (JP)**

(74) Representative: **Henkel, Feiler, Hänzel & Partner**
**Möhlstrasse 37**
**D-8000 München 80 (DE)**

Courier Press, Leamington Spa, England.

## Description

The present invention relates to a fast breeder nuclear reactor vessel including a reaction vessel body through which a liquid metal coolant flows to cool a reactor core while forming a free liquid level; a such fast breeder reactor vessel is so designed as to reduce a thermal stress applied to the vessel wall.

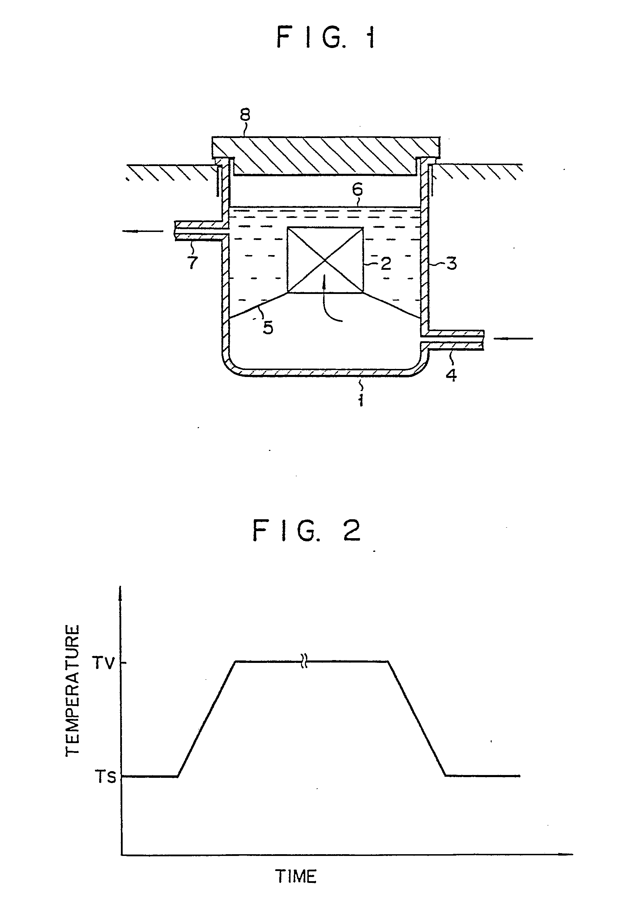

With a fast breeder reactor, a liquid metal represented by liquid sodium is generally applied as a coolant. Such liquid metal coolant flows in a direction indicated by arrows given in Fig. 1. Namely, the coolant runs from an inlet nozzle 4 provided at the bottom of the peripheral wall 3 of a reactor vessel 1 holding a reactor core 2 into the bottom region of the reactor vessel 1. The coolant runs from the bottom of the reactor vessel 1 to a partition wall 5 and then passes through the reactor core 2, starting from its bottom. The coolant is heated by absorbing heat generated in the reactor core 2. The coolant leaving the reactor core 2 is carried through an outlet nozzle 7 provided in the upper part of the peripheral wall 3, while forming a free liquid level 6, and then circulated to a heat exchanger (not shown). The upper opening of the reactor vessel 1 is sealed by a shield plug 8.

The coolant flowing through a fast breeder reactor constructed as described above has such a temperature cycle as is illustrated in Fig. 2. The core reaction is controlled in such a manner that when the reactor is started, the coolant temperature rises at a prescribed rate from the stand-by temperature Ts (generally 200°C) to the normal operating temperature Tv (300° to 400°C at the core bottom and 450° to 550°C at the core top). For higher efficiency, the rate of temperature rise is preferred to have the highest possible level, as far as the reactor plant operation permits.

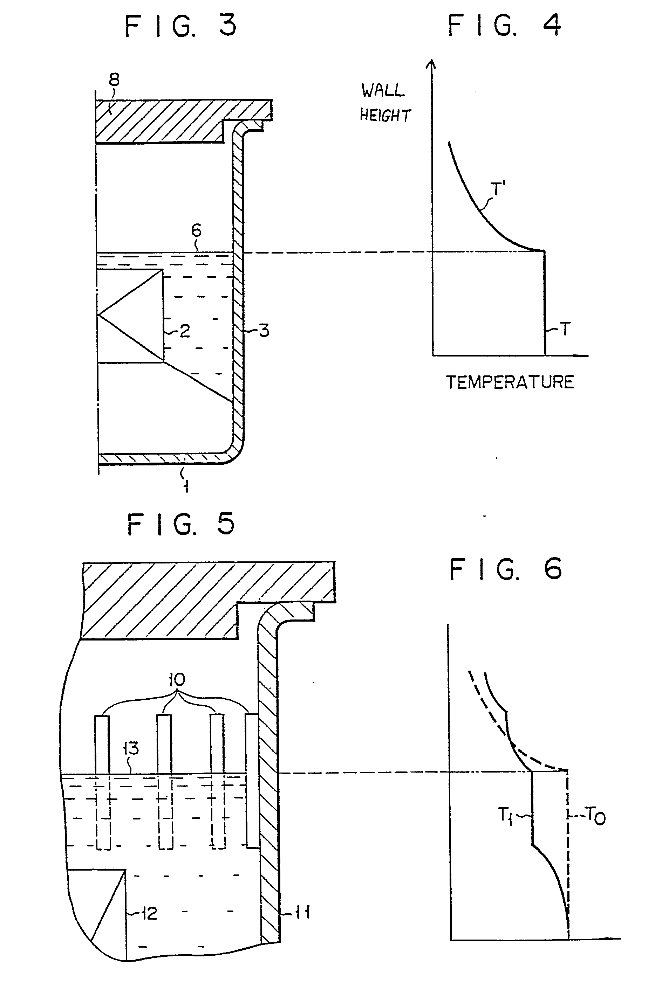

Since an extremely corrosive alkali metal liquid is generally applied as the coolant of the fast breeder reactor, the reactor vessel is made of stainless steel. The known low heat conductivity of the stainless steel causes a prominent temperature gradient to arise in that part of the reactor vessel peripheral wall 3 which lies near the free liquid level 6 of the coolant. Fig. 4 corresponding to Fig. 3 showing the section of the reactor vessel 1 indicates a distribution of temperature prevailing on the lateral wall of the reactor vessel, while the coolant temperature is progressively increasing. A temperature T at that portion of the reactor vessel peripheral wall 3 which lies below the free liquid level 6 of the coolant remains substantially constant, because said portion is contacted by the coolant. In contrast, a temperature T' prevailing in that portion of the reactor vessel peripheral wall 3 which lies above said free liquid level 6 suddenly drops, causing a tremendous thermal stress to be applied, as is proved, to that portion of the reactor vessel peripheral wall 3 which lies near the free liquid level 6 of the coolant. The higher the temperature rise rate of the coolant, the more noticeable a temperature gradient on the reactor vessel peripheral wall 3. In an extreme case, the reactor vessel peripheral wall 3 sometimes tends to be subjected to plastic deformation. The above-mentioned temperature gradient presents difficulties not only at the start but also at the stop of the breeder reactor.

To decrease a temperature gradient on the reactor vessel peripheral wall 3 for reduction of a thermal stress applied to said peripheral wall 3, the conventional process has comprised minimizing the temperature rise rate of the coolant as much as possible even at the sacrifice of the operating efficiency of the breeder reactor. Said temperature rise rate has been set, for example, at a lower level than 25°C/hr. With a known breeder reactor, part of a low temperature coolant conducted to the reactor vessel is let to pass through a space spatially provided betwen the reactor vessel peripheral wall and coolant to cool said peripheral wall, thereby reducing the aforementioned thermal stress. However, this known reactor vessel has the drawback that it has a complicated construction, leading to the enlargement of its size.

This invention has been accomplished in view of the above-mentioned circumstances, and it is an object of the invention to provide a fast breeder reactor vessel, which reduces by simple arrangement the thermal stress which, not only at the start, but also at the stop of the reactor, is applied to the reactor vessel peripheral wall, particularly that portion of the peripheral wall of the reactor vessel which lies near the free liquid level of the coolant, thereby improving the safety of the subject breeder reactor and elevating its operating efficiency.

To attain the above-mentioned object, this invention provides a fast breeder nuclear reactor vessel including a reaction vessel body through which a liquid metal coolant flows to cool a reactor core while forming a free liquid level said fast breeder reactor vessel comprising heat propagating means which is provided in the peripheral wall of said reactor vessel body in contact therewith or apart therefrom and which is in thermal contact with the coolant directly or through the portion of the wall below the free liquid level, and whose upper portion lies above the free liquid level of the coolant, and whose lower portion lies below said free liquid level of the coolant, so that the heat propagation means provides a preferential heat transfer path between the coolant and the peripheral wall of the vessel above the free liquid level of the coolant.

The heat propagating means is preferred to be formed of a heat pipe filled with an operating liquid.

With a fast breeder reactor vessel embodying this invention, heat is propagated by the heat-propagating means from below the free liquid level of the liquid metal coolant to above said free liquid level, thereby reducing a temperature gradient on the peripheral wall of the reactor vessel without applying any special control system or motive power, and consequently reducing a thermal stress applied to the peripheral wall of the reactor vessel.

This invention can be more fully understood from the following detailed description when taken in conjunction with the accompanying drawings, in which:

Fig. 1 is a schematic sectional view of an ordinary fast breeder reactor vessel;

Fig. 2 graphically shows changes in the temperature of a liquid metal coolant during the start and stop of the fast breeder reactor;

Fig. 3 is a schematic sectional view of part of the ordinary fast breeder reactor vessel;

Fig. 4 graphically illustrates the relationship between the height of the peripheral wall of the reactor vessel during the start of the reactor of Fig. 3 and the distribution of temperature through said peripheral wall;

Fig. 5 is a schematic sectional view of part of a fast breeder reactor vessel according to one embodiment of this invention comprising a plurality of rod-like heat pipes arranged in contact with the inner surface of the peripheral wall of the reactor vessel;

Fig. 6 graphically indicates the distribution of temperature through the peripheral wall of the fast breeder reactor vessel of Fig. 5 embodying the invention;

Fig. 7 is a schematic sectional view of part the peripheral wall of a fast breeder reactor vessel according to another embodiment of the invention comprising a plurality of plate-like heat pipes arranged in contact with the inner surface of the peripheral wall of the reactor vessel;

Fig. 8 graphically shows a temperature distribution through the peripheral wall of the reactor vessel according to the embodiment of Fig. 7;

Figs. 9 and 10 schematically set forth the section of a fast breeder reactor vessel according to another embodiment of the invention which comprises a plurality of heat pipes arranged inside of the peripheral wall of said reactor vessel;

Fig. 11 is a schematic sectional view of part of a fast breeder reactor vessel according to another embodiment of the invention which comprises a plurality of heat pipes whose upper end is fitted with a heat resistor;

Fig. 12 graphically sets forth a temperature distribution through the peripheral wall of the reactor vessel according the embodiment of Fig. 11;

Figs. 13 and 14 are fractional sectional views partly in section of fast breeder reactor vessels according to other embodiments of the invention which comprise a plurality of heat pipes provided not in contact with the peripheral wall of said reactor vessels;

Fig. 15 is a schematic sectional view of part of a fast breeder reactor vessel according to another embodiment of the invention which comprises a plurality of heat pipes arranged on the outer surface of the peripheral wall of said reactor vessel;

Fig. 16 graphically shows a temperature distribution through the peripheral wall of the reactor vessel according to the embodiment of Fig. 15;

Fig. 17 is a schematic oblique view partly in section of a fast breeder reactor vessel according to another embodiment of the invention which comprises a plurality of cylindrical heat pipes;

Fig. 18 is a schematic sectional view of part of the reactor vessel according to the embodiment of Fig. 17;

Fig. 19 graphically sets forth a temperature distribution through the peripheral wall of the reactor vessel according to the embodiment of Fig. 17; and

Figs. 20 and 21 are schematic sectional views of part of fast breeder reactor vessels according to other embodiments of the invention which comprise a plurality of cylindrical heat pipes.

Heat propagating means used in this invention absorbs heat prevailing on that portion of the peripheral wall of a reactor vessel which lies below the free liquid level of a liquid metal coolant or, in case of need, absorbs the heat of a hot coolant in the lower part of said heat propagating means. The heat thus trapped is transferred to the upper part of said heat propagating means to heat the cold portion of the peripheral wall of the reactor vessel which lies above the free liquid level of the liquid metal coolant. Any material can be used as the heat-propagating means of this invention, provided it carried out the above-mentioned heat-propagating function and is resistant to the corrosive nature of a liquid metal coolant. Preferred heat propagating means is the so-called heat pipe constructed by filling an operation liquid such as liquid sodium, liquid potassium or alloy of liquid sodium-liquid potassium or mercury in a corrosion-resistant vessel made of, for example, stainless steel. The operation liquid is evaporated by heat transferred to the lower end of the heat pipe. The upper end of said heat pipe in heated by the heat released from the vapor of said operation liquid which is condensed at the upper end of said heat pipe.

Description is now given with reference to Fig. 5 of a fast breeder reactor vessel according to one embodiment of this invention. A plurality of rod-like heat pipes 10 are equidistantly arranged on the inner surface of the peripheral wall 11 of the reactor vessel. The upper end of each heat pipe 10 is above the free liquid level 13 of a coolant used to cool a reactor core 12. The lower end of said heat pipe 10 lies below said free liquid level 13. The heat pipe 10 should advisably be welded to the peripheral wall 11 of the reactor vessel or tightly fixed to said peripheral wall by proper means.

When the reactor is started, the above-mentioned arrangement of the respective heat pipes 10 enables the heat of that portion of the peripheral wall of the reactor vessel which lies below the free liquid level 13 of the coolant and the heat of the coolant itself to be transferred to that cold portion of the peripheral wall of the reactor vessel which lies above the free liquid level 13 of the coolant. Therefore, that portion of the peripheral wall 11 of the reactor vessel which lies above said free liquid level 13 is heated over a sufficiently broad area by means of the above-mentioned plural heat pipes 10. Even where, therefore, the peripheral wall 11 of the reactor vessel is formed of a material of low heat conductivity, the temperature of said peripheral wall 11 quickly rises, thereby assuring a sufficiently gentle temperature gradient through that portion of the peripheral wall 11 of the reactor vessel which lies near the liquid level 13 of the coolant. Provision of said plural heat pipes 10 causes a temperature distribution through the peripheral wall 11 of the reactor vessel at a certain point during the temperature rising period of the coolant to have a pattern indicated by a solid line T1 given in Fig. 6 corresponding to Fig. 5. Therefore, a temperature gradient on that portion of the peripheral wall 11 of the reactor vessel which lies near the free liquid level 13 of the coolant can be rendered much more gentler than the temperature gradient T0 observed in the conventioned fast breeder reactor vessel.

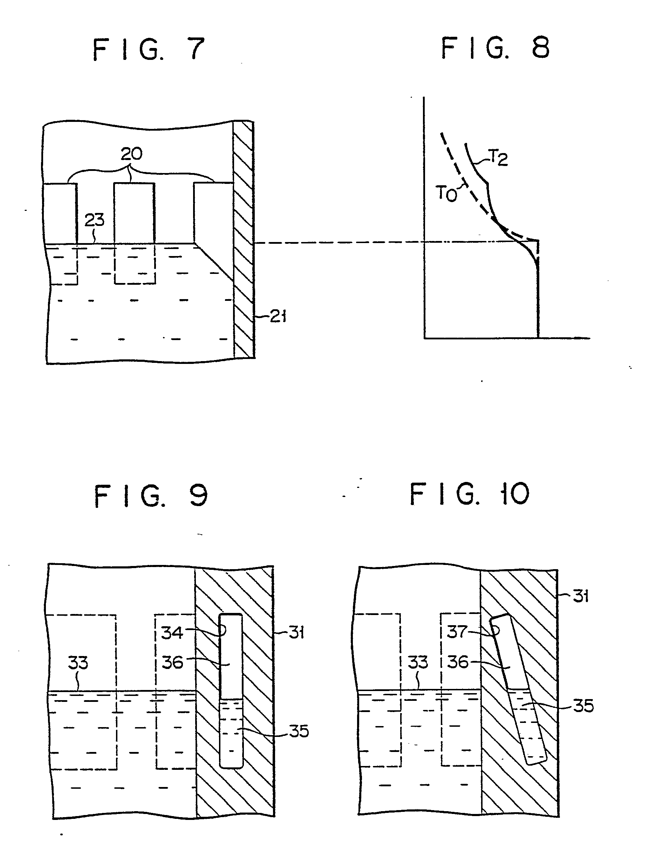

Description is now given with reference to Fig. 7 of a fast breeder reactor vessel according to another embodiment of the invention. With the embodiment of Fig. 7, a plurality of plate type heat pipes 20 are arranged on the inner surface of the peripheral wall 21 of the reactor vessel. This plate type heat pipe 20 is made wider than the rod-like heat pipe and has a curvature radius matching the inner plane of said peripheral wall 21. Therefore, the respective heat pipes 20 contact said peripheral wall 21 in a much enlarged area. Consequently heat prevailing in that hot portion of the peripheral wall 21 of the reactor vessel which lies below the liquid level 23 of the coolant can be effectively conducted to the cold portion of said reactor vessel peripheral wall 21 lying above the liquid level 23, thereby assuring a gentle temperature gradient in that portion of said lateral wall 21 which lies near the liquid level 23. A solid line T2 given in Fig. 8 corresponding to Fig. 7 shows a temperature distribution through the reactor vessel peripheral wall 21 at a certain point during the temperature rise of the coolant. Namely, with a fast breeder reactor vessel embodying this invention, a temperature gradient appearing in the vicinity of the liquid level 23 of the coolant can be rendered much gentler than a temperature gradient T0 observed in the conventional reactor vessel.

The heat pipes 10, 20 respectively used in the embodiments of Figs. 5 and 7 may be arranged on the outer surface of the reactor vessel peripheral wall 21.

Description is now given with reference to Fig. 9 of a fast breeder reactor vessel according to another embodiment of this invention. A plurality of cavities 34 are provided inside of the peripheral wall 31 of the reactor vessel. The upper end of each cavity 34 lies above the free liquid level 33 of the coolant, and the lower end of said cavity 34 lies below said liquid level 33. An operation liquid 35 is filled in about half the cavity 34, with a free space 36 left above, thereby embedding a plurality of heat pipes in the reactor vessel peripheral wall 31. With the embodiment of Fig. 9, the cavity 34 extends in a direction intersecting the coolant liquid level 33 at right angles. However, it is possible to cause a cavity 37 to extend, as shown in Fig. 10, in a state inclined to the coolant liquid level 33. With the embodiments of Figs. 9 and 10, heat prevailing in that hot portion of the reactor vessel peripheral wall 31 which lies below the coolant liquid level 33 is conducted to that cold portion of said reactor vessel peripheral wall 31 which lies above the coolant liquid level 33, thereby assuring, as in the foregoing embodiments, a gentle temperature gradient on that portion of the reactor vessel peripheral wall 31 which lies near the coolant liquid level 33. In the case of Figs. 9 and 10, a plurality of heat pipes are embedded in the reactor vessel peripheral wall 31 itself. Unlike, therefore, the case where a plurality of heat pipes are arranged outside of the reactor vessel peripheral wall 31, no contact heat resistance arises between said reactor vessel lateral wall 31 and heat pipes, thereby elevating the efficiency of heat propagation, and assuring a gentler temperature gradient. In the case of the embodiments of Figs. 9 and 10, it is unnecessary to build any extra structure outside of the reactor vessel peripheral wall 31, making it possible to reduce the size of the whole reactor vessel and simplifying its arrangement. Obviously, cylindrical heat pipes may be embedded in the reactor vessel peripheral wall 31.

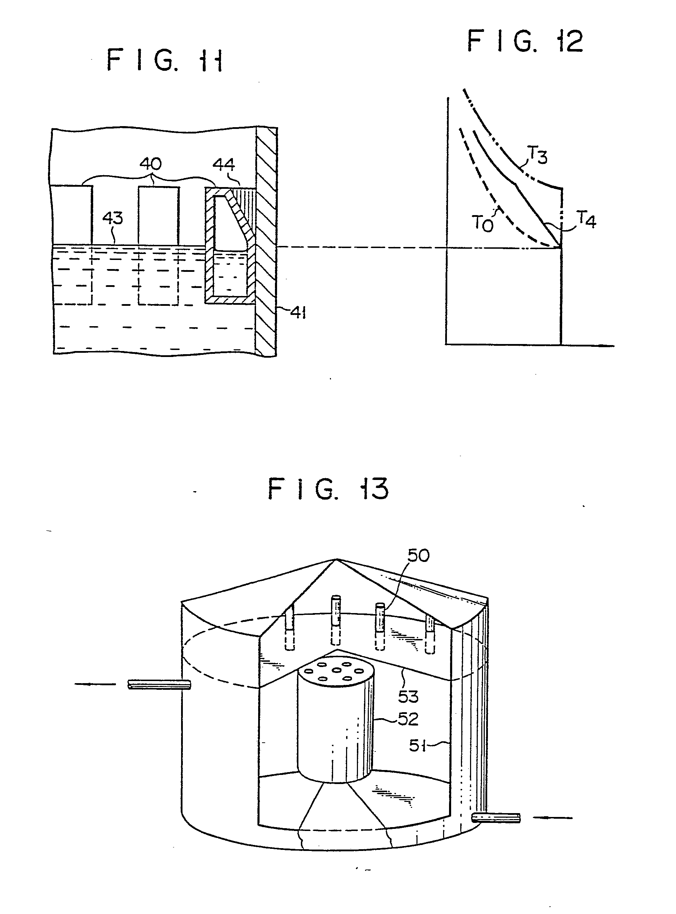

Where, with some of the aforementioned embodiments, heat-propagating means has to conduct an excess amount of heat, then a new prominent temperature gradient tends to arise on that portion of the reactor vessel peripheral wall 31 which lies near the upper end of said heat-propagating means, though a temperature gradient on that portion of the reactor vessel peripheral wall 31 which lies near the free liquid level 33 of the coolant can be rendered gentle. Particularly where mercury is applied as an operation liquid, then the above-mentioned new temperature gradient more noticeably tends to arise. In such case, it is necessary to somewhat reduce an amount of heat conducted by the heat-propagating means. A fast breeder reactor vessel according to another embodiment of Fig. 11 has been described to resolve the above-mentioned problem.

Referring to Fig. 11, a plurality of heat pipes 40 are provided in a state pressed against that portion of the reactor vessel peripheral wall 41 which lies below the free liquid level 43 of a coolant. A wedge-shaped heat resistor 44 is interposed between the heat pipe 40 and reactor vessel peripheral wall 41. Further, it is possible to omit the heat resistor 44, hold the reactor vessel peripheral wall 41 and heat pipe 40 in a state not contacting each other and conduct heat by radiation from the upper portion of the heat pipe 40 to the reactor vessel peripheral wall 41. The heat resistor well serves the purpose, if it has a lower heat conductivity than heat-propagating means such as the heat pipe. A heat pipe made of stainless steel generally meets the requirement.

With the embodiment of Fig. 11, a large amount of heat transferred from that hot portion of the peripheral wall of the reactor vessel which lies below the coolant liquid level 43 and the coolant itself can be conducted by the heat resistor 44 in a reduced state to that cold portion of the reactor vessel peripheral wall which lies above the coolant liquid level 43, thereby eliminating the possibility that when a heat pipe capable of conducting a large amount of heat is used without providing the heat resistor 44, then a prominent temperature gradient arises on that portion of the reactor vessel peripheral wall which contacts the upper portion of the heat pipe. When heat conducted through the heat pipe 40 is transferred to that portion of the reactor vessel peripheral wall 41 which lies above the coolant liquid level 43, then a temperature distribution through the reactor vessel peripheral wall 41 at a certain point during the temperature rising period of the coolant indicates a pattern illustrated by a solid line T4 given in Fig. 12. As a result, it is possible to render a temperature gradient through that portion of the reactor vessel peripheral wall which lies near the coolant liquid level 43 much gentler than a temperature gradient T0 observed in the conventional reactor vessel and a temperature gradient T3 occurring when a heat pipe capable of conducting a large amount of heat is applied.

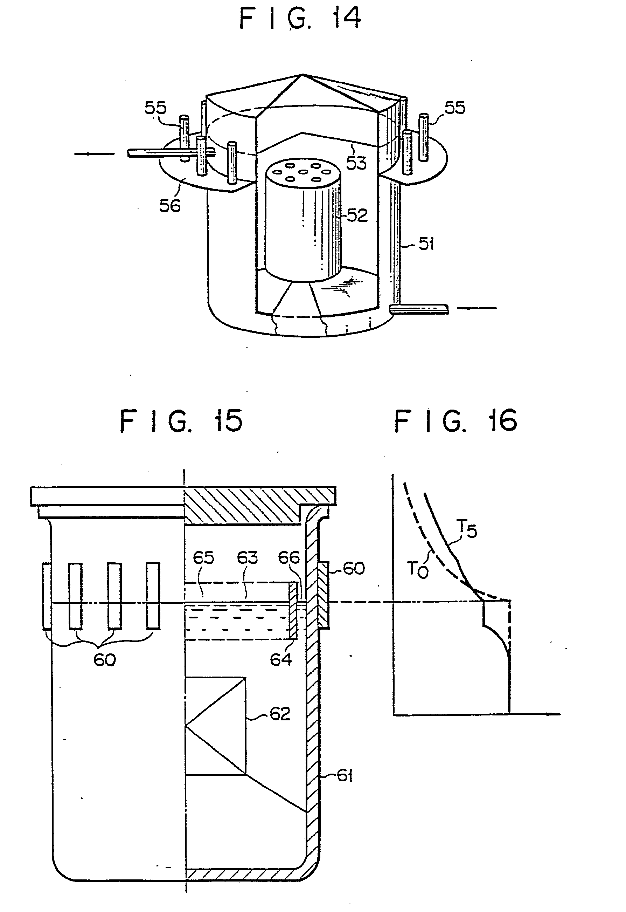

Description is now given with reference to Figs. 13 and 14 of a fast breeder reactor vessel according to other embodiments of this invention. Referring to Fig. 13, a plurality of rod-like heat pipes 50 are spatially provided on the inner plane of the peripheral wall of the reactor vessel in mutually facing relationship. The upper portion of the heat pipe 50 projects above the free liquid level 53 of a coolant. The lower portion of said heat pipe 50 is dipped in a coolant. With the above-mentioned arrangement, the coolant heat raised by a reactor core 52 is directly conducted to the lower part of the heat pipe 50. The raised coolant heat is radiated from that portion of the heat pipe 50 which lies above the coolant liquid level 53 to that cold portion of the reactor peripheral wall 51 which lies above said coolant liquid level 53, thereby assuring a gentle temperature gradient on that portion of the reactor vessel peripheral wall 51 which lies near the coolant liquid level 53. Namely, the embodiment of Fig. 13 gives the same result as the foregoing embodiments. Further with the embodiment of Fig. 13, heat exchange is effected by radiation, thereby elevating the uniformity and reliability of thermal connection between the heat pipe 50 and reactor vessel peripheral wall 51.

With the embodiment of Fig. 14, a plurality of heat pipes 55 are equidistantly arranged on the outer peripheral wall 51 of the reactor vessel in mutually facing relationship. The lower portion of the heat pipe 55 lies below the free liquid level 53 of the coolant. The upper portion of said heat pipe 55 lies above said liquid level 53. For elevation of heat propagation from the reactor vessel peripheral wall 51 to the lower part of the heat pipe 55, it is preferred to connect the lower part of the heat pipe 55 to that portion of the reactor vessel peripheral wall 51 which lies below the coolant liquid level 53 by a coupling member 56. The arrangement of the embodiment of Fig. 14 gives substantially the same result as that of Fig. 13. With the embodiment of Fig. 14 the heat pipe 55 is provided outside of the reactor vessel, thereby offering the advantage of reducing the size of the body of the reactor vessel and reducing limitations imposed on the shape and size of the heat pipe.

Description is now given with reference to Fig. 15 of a fast breeder reactor vessel according to another embodiment of this invention. The embodiment of Fig. 15 prevents the coolant whose heat is raised in the reactor core from directly contacting the heat-propagating means and the reactor vessel peripheral wall to raise the temperature of said members. With the embodiment of Fig. 15, a plurality of heat pipes 60 are equidistantly arranged on the outer peripheral wall 61 of the reactor vessel. Further a cylindrical partition wall 64 dividing the coolant liquid level 63 into an inner liquid level 65 and outer liquid level 66 is provided in the reactor vessel in concentric relationship with the reactor vessel peripheral wall 61. The upper end of the heat pipe 60 and that of the cylindrical partition wall 64 lie above the coolant liquid level 63, and the lower ends of those members 60, 64 lie below said coolant liquid level 63. With the embodiment of Fig. 15, a plurality of heat pipes 60 are provided on the outer peripheral wall 61. However, this invention need not be limited to this arrangement. But it is possible to combine the heat pipes 60 of Fig. 15 with those used in any of the foregoing embodiments.

With the embodiment of Fig. 15, the cylindrical partition wall 64 set near the coolant liquid level 63 divides the coolant into the portion held inside of said partional 64 and that held outside thereof. At the start of the reactor, therefore, the coolant rapidly heated by a reactor core 62 is prevented from directly contacting the reactor vessel peripheral wall 61, and is temporarily retained inside of said cylindrical partition wall 64. Therefore, the temperature of the coolant held inside of said cylindrical partition wall 64 becomes different from that of the coolant held between the outside of said cylindrical partition wall 64 and the inside of peripheral wall 61 · of the reactor vessel. Namely, the temperature of the coolant held outside of said cylindrical partition wall 64 is raised at a lower rate than the temperature of the coolant held inside of said cylindrical partition wall 64. The above-mentioned delay in the temperature rise limits an amount of heat propagated to that portion of the reactor vessel peripheral wall 61 which lies above the coolant liquid level 63. At the start of the reactor, therefore, temperature prevailing in that portion of the reactor vessel peripheral wall 61 which lies near the coolant liquid level 63 has a gentle gradient. Further, the heat of that portion of the reactor vessel peripheral wall which is contacted by the coolant held outside of that portion of the cylindrical partition wall 64 which lies below the coolant liquid level 63 is conducted by the good heat-propagating action of the heat pipe 60 to that cold portion of the reactor peripheral wall which lies above said coolant liquid level 63. The heat pipe 60 enables heat to be .conducted through a sufficiently broad heat passage. Even if, therefore, the reactor vessel peripheral wall 61 is formed of a material of low heat conductivity, temperature rise is quickly effected. As a result, a temperature gradient in the above-mentioned portion of the reactor vessel peripheral wall is rendered gentler with the aid of the favorable effect of the cylindrical partition wall 64.

A solid line T5 given in Fig. 16 corresponding to Fig. 15 indicates a temperature distribution through the reactor vessel peripheral wall 61 which is realized by application of the cylindrical partition wall 64 and heat pipe 60. As seen from Fig. 16, a temperature gradient T5 on that portion of the reactor vessel peripheral wall 61 which lies near the coolant liquid level 63 can be rendered gentler than a temperature gradient T0 observed in the conventional reactor vessel. Further at the stop of a reactor, the aforesaid cylindrical partition wall 64 and heat pipe 60 can reduce the reverse temperature gradient on the reactor vessel peripheral wall 61.

With the embodiment of Fig. 15, a cylindrical partition wall was applied to divide the free liquid level of a coolant into the inner and outer regions. However, it is to be noted that the shape of said partition wall may assume not only the cylindrical hot also any other form, provided the above-mentioned object is attained.

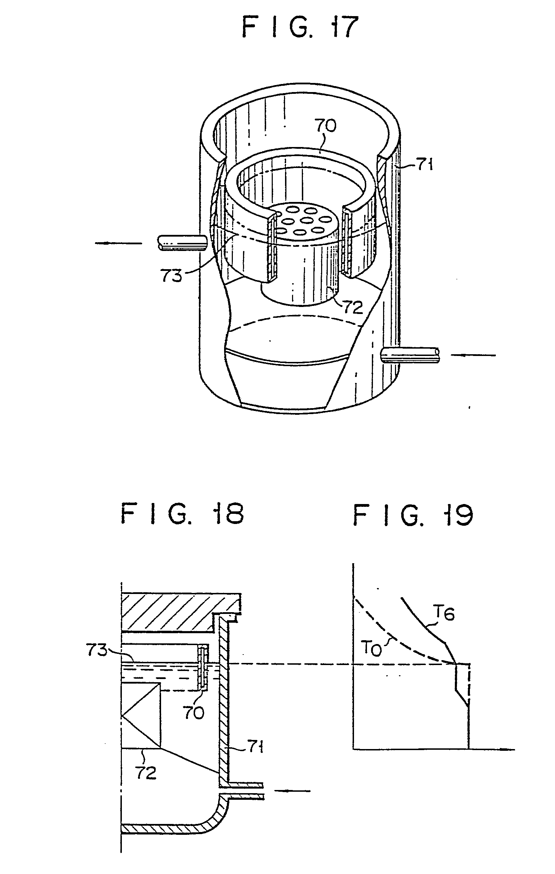

Description is now given with reference to Figs. 17 to 21 of fast breeder reactor vessels according to some other embodiments of this invention. With a reactor vessel shown in Figs. 17 and 18, a cylindrical heat pipe 70 is provided inside of a reactor vessel peripheral wall 71 in concentric relationship therewith. The upper annular edge of said cylindrical heat pipe 70 lies above the free liquid level 73 of a coolant, and the lower annular edge of said cylindrical heat pipe 70 lies below the free liquid level 73 of the coolant.

At the start of the reactor, the above-mentioned arrangement causes the heat of a hot coolant raised during its passage through a reactor core 72 is directely conducted to the lower portion of the cylindrical heat pipe 70 where an operation liquid evaporates. Heat is radiated from the upper portion of the cylindrical heat pipe 70 where the operation liquid condenses to that cold portion of the reactor vessel peripheral wall 71 which lies above the coolant liquid level 73. Therefore, that portion of the reactor vessel peripheral wall 71 which lies above the coolant liquid level 73 receives a large amount of heat from the side through a sufficiently broad heat passage due to the presence of said cylindrical heat pipe 70. Even if, therefore, the reactor vessel peripheral wall 71 is formed of a material of low heat conductivity, quick temperature rise is effected, thereby providing a gentle temperature gradient in the above-mentioned portion of the reactor vessel peripheral wall 71. With the embodiment of Figs. 17 and 18, the cylindrical heat pipe 70 is set apart from the reactor vessel peripheral wall 71, and heat prevailing in that portion of said cylindrical heat pipe 70 which lies below the coolant liquid level 73 is radiated to that portion of said heat pipe 70 which lies above said coolant liquid level 73. Therefore, heat conduction can be effected more uniformly and reliably than in the case where a rod-shaped heat pipe might be pressed against the reactor vessel peripheral wall 71. The cylindrical heat pipe 70 can increase a morphological coefficient denoting the rate of heat radiation up to a substantially maximum extent. Further, the coolant held in that portion of the reactor vessel peripheral wall 71 which lies near the coolant liquid level 73 is divided into a part held inside of the cylindrical heat pipe 70 and that held outside thereof. At the start of the reactor, therefore, a coolant rapidly heated by a reactor core 72 is prevented from directly contacting the reactor vessel peripheral wall 71 in such heated state, thereby suppressing a temperature rise in that portion of the reactor vessel peripheral wall 71 which lies near the coolant liquid level 73. At the start of the reactor, therefore, a temperature prevailing in that portion of the reactor vessel peripheral wall 71 which lies near the coolant liquid level 73 is rendered gentle with the aid of the aforementioned heat radiation.

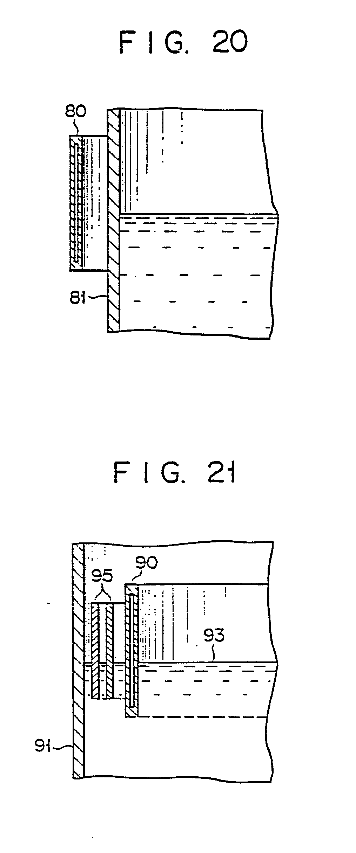

The cylindrical heat pipe 70 causes a temperature gradient on the reactor vessel peripheral wall 71 to indicate a gentler pattern illustrated by a solid line T6 given in Fig. 19 corresponding to Fig. 18, than a temperature gradient T0 observed in that portion of the conventional reactor vessel which lies near the liquid level of a coolant.

The position of the cylindrical heat pipe 70 is not limited to that shown in Fig. 17. Said cylindrical heat pipe 70 may be pressed against the inner plane of the reactor vessel peripheral wall 71. Further as seen from Fig. 20, a cylindrical heat pipe 80 may be set outside of a reactor vessel peripheral wall 81 in concentric relationship therewith. In the case of Fig. 20, heat is radiated from the reactor vessel peripheral wall 81 to the lower portion of the cylindrical heat pipe 80 and also from the upper portion of said cylindrical heat pipe 80 to the reactor vessel peripheral wall 81. The embodiment of Fig. 20 has the advantages that the reactor vessel can have its size more reduced than when the cylindrical heat pipe 80 is set inside of the reactor vessel peripheral wall 81; the temperature of the cylindrical heat pipe 80 can be held at a relatively low level; the heat radiation efficiency of the cylindrical heat pipe 80 can be easily controlled by providing a driving mechanism between the cylindrical heat pipe 80 and the reactor vessel peripheral wall 81; and maintenance and, if necessary, repair can be facilitated.

Description is now given with reference to Fig.

21 of a fast breeder reactor vessel according to still another embodiment of this invention. With the embodiment of Fig. 21, a cylindrical heat pipe 90 is provided inside of a reactor vessel peripheral wall 91 as in the embodiment of Fig. 17. One or more cylindrical partition walls 95 are provided between the cylindrical heat pipe 90 and reactor vessel peripheral wall 91. The partition wall 95 is designed to act as a heat insulator, thereby suppressing a temperature rise in that portion of the reactor vessel peripheral wall 91 which lies near the coolant liquid level 93, and controlling heat radiation in that portion of the cylindrical heat pipe 90 which lies above the coolant liquid level 93.

The foregoing description refers to the case where a temperature gradient is controlled at the start of a reactor. However, this invention makes it possible to reduce a reverse temperature gradient at the stop of a reactor exactly in the same manner. For the movement of the heat pipe at both start and stop of the reactor, it is advised to apply that type of heat pipe in which a capillary pressure free from directionality is utilized. To assure a gentle temperature gradient only at the start of a reactor, it is advised to use that type of heat pipe in which a capillary pressure free from directionality is not utilized. The shape of the heat pipe is not limited to those which are described in the foregoing embodiments.

As mentioned above, this invention provides a fast breeder reactor vessel which enables thermal stress applied to a reactor vessel peripheral wall at the start and stop of a reactor to be reduced without applying a complicated arrangement and control system and consuming any extra power, thereby elevating the safety and operating efficiency of the reactor.

**Claims**

1. A fast breeder nuclear reactor vessel including a reactor vessel body through which a liquid metal coolant flows to cool a reactor core (12) while forming a free liquid level which comprises: heat propagating means (10) which is provided in the peripheral wall (11) of said reactor vessel body in contact therewith or apart therefrom and which is in thermal contact with the coolant directly or through the portion of the wall (11) below the free liquid level (13), and whose upper portion lies above the free liquid level (13) of the coolant, and whose lower portion lies below said free liquid level (13) of the coolant, so that the heat propagating means (10) provides a preferential heat transfer path between the coolant and the peripheral wall (11) of the vessel above the free liquid level (13) of the coolant.

2. The fast breeder reactor vessel according to claim 1, wherein the heat-propagating means consists of a rod (10) or plate-shaped heat pipe (20, 40, 60), and is arranged in plurality in the circumferential direction of the peripheral wall (11).

3. The fast breeder reactor vessel according to claim 1, wherein the heat-propagating means is a cylindrical heat pipe (90).

4. The fast breeder reactor vessel according to claim 2 or 3, wherein the heat pipe (20) contacts that portion of the peripheral wall (41) which lies below the free liquid level (43) of the coolant, and a heat resistor (44) is formed between part or the whole of that portion of the heat pipe (20) which lies above the free liquid level (43) of the coolant and the peripheral wall (41).

5. The fast breeder reactor vessel according to claim 1, 2 or 3, which comprises one or more cylindrical partition walls (64) provided between the reactor vessel peripheral wall (61) and a reactor core (62) to divide the free liquid level of the coolant into two parts.

**Revendications**

1. Cuve de réacteur nucléaire surrégénérateur rapide comportant un corps de cuve de réacteur à travers lequel un réfrigérant métallique liquide s'écoule pour refroidir un coeur de réacteur (12) tout en formant un niveau de liquide libre qui comprend:
un moyen de propagation de la chaleur (10) qui est prévu dans la paroi périphérique (11) du dit corps de cuve de réacteur, au contact de cette paroi ou à part de cette paroi, et qui est en contact thermique avec le réfrigérant, directement ou par l'intermédiaire de la portion de la paroi (11) située sous le niveau de liquide libre (16), et dont la portion supérieure se trouve au-dessus du niveau de liquide libre (13) du réfrigérant et dont la portion inférieure se trouve en dessous du dit niveau de liquide libre (13) du réfrigérant, de sorte que le moyen de propagation de la chaleur (10) fournit un chemin préférentiel de transfert thermique entre le réfrigérant et la paroi périphérique (11) de la cuve au-dessus du niveau du liquide libre (13) du réfrigérant.

2. Cuve de réacteur surrégénérateur rapide selon la revendication 1, dans lequel le moyen de propagation de la chaleur est constitué d'un tube de chaleur en forme de tige (10) ou en forme de plaque (20, 40, 60) dont un certain nombre est disposé selon la direction circonférentielle de la paroi périphérique (11).

3. Cuve de réacteur surrégénérateur rapide selon la revendication 1, dans lequel le moyen de propagation de la chaleur est un tube de chaleur cylindrique (90).

4. Cuve de réacteur surrégénérateur rapide selon la revendication 2 ou la revendication 3, dans lequel le tube de chaleur (20) vient au contact de la portion de la paroi périphérique (41) située au-dessous du niveau de liquide libre (43) du réfrigérant et dans lequel une résistance thermique (44) est prévue entre d'une part une partie ou la totalité de la portion du tube de chaleur (20) située au-dessus du niveau du liquide libre (43) du réfrigérant et d'autre part la paroi périphérique (41).

5. Cuve de réacteur surrégénérateur rapide selon les revendications 1, 2 ou 3, comportant une ou plusieurs cloisons cylindriques (64) prévues entre la paroi périphérique (61) de la cuve du réacteur et un coeur de réacteur (62) pour diviser en deux parties le niveau de liquide libre du réfrigérant.

## Patentansprüche

1. Kessel für schnellbrütende Kernreaktoren mit einem Reaktorkesselkörper, durch den ein Flüssigmetall-Kühlmittel zum Kühlen eines Reaktorkerns (12) unter Bildung eines freien Flüssigkeitsspiegels strömt, umfassend:
eine Wärmeausbreitungseinrichtung (10), die in der Umfangswand (11) des Reaktorkesselkörpers in Berührung mit diesem oder von ihm beabstandet angeordnet ist und unmittelbar oder über den unter dem freien Flüssigkeitsspiegel (13) liegenden Abschnitt der Wand (11) mit dem Kühlmittel in thermischem Kontakt steht und deren oberer Abschnitt über dem freien Flüssigkeitsspiegel (13) des Kühlmittels liegt, während ihr unterer Abschnitt unter dem freien Flüssigkeitsspiegel (13) des Kühlmittels liegt, so daß die Wärmeausbreitungseinrichtung (10) eine bevorzugte Wärmeübergangsstrecke zwischen dem Kühlmittel und der Umfangswand (11) des Gefäßes overhalb des freien Flüssigkeitsspiegels (13) des Kühlmittels bildet.

2. Kessel für schnellbrütende Kernreaktoren nach Anspruch 1, dadurch gekennzeichnet, daß die Wärmeausbreitungseinrichtung aus einem Stab (10) oder einem plattenförmigen Wärmehohlleiter (20, 40, 60) besteht und in mehrfachen Einheiten in Umfangsrichtung der Umfangswand (11) angeordnet ist.

3. Kessel für schnellbrütende Kernreaktoren nach Anspruch 1, dadurch gekennzeichnet, daß die Wärmeausbreitungseinrichtung ein zylindrischer Wärmehohlleiter (90) ist.

4. Kessel für schnellbrütende Kernreaktoren nach Anspruch 2 oder 3, dadurch gekennzeichnet, daß der Wärmehohlleiter (20) den unter dem freien Flüssigkeitsspiegel (43) des Kühlmittels liegenden Abschnitt der Umfangswand (41) kontaktiert und daß ein Wärmewiderstand (44) zwischen einem Teil des Abschnitts oder dem gesamten Abschnitt des Wärmehohlleiters (20), der über dem freien Flüssigkeitsspiegel (43) des Kühlmittels liegt, und der Umfangswand (41) gebildet ist.

5. Kessel für schnellbrütende Kernreaktoren nach Anspruch 1, 2 oder 3, dadurch gekennzeichnet, daß zwischen der Reaktorgefäß-Umfangswand (61) und einem Reaktorkern (62) eine oder mehrere zylindrische Trennwände (64) zum Unterteilen des freien Flüssigkeitsspiegels des Kühlmittels in zwei Teile vorgesehen sind.

# F I G. 1

# F I G. 2

# F I G. 3

# F I G. 4

WALL HEIGHT

$T'$

$T$

TEMPERATURE

# F I G. 5

# F I G. 6

$T_1$    $T_O$

## F I G. 7

## F I G. 8

## F I G. 9

## F I G. 10

F I G. 11

F I G. 12

F I G. 13

# F I G. 14

# F I G. 15

# F I G. 16

# F I G. 17

# F I G. 18

# F I G. 19

6

F I G. 20

80

81

F I G. 21

95

90

93

91